# NEUE EUROPÄISCHE PATENTSCHRIFT

(11) **EP 1 419 836 B2**
(45) Veröffentlichungstag und Bekanntmachung des Hinweises auf die Entscheidung über den Einspruch: **19.10.2011**
(45) Hinweis auf die Patenterteilung: 01.02.2006
(21) Anmeldenummer: 02024817.5
(22) Anmeldetag: 07.11.2002
(51) Int. Cl.: B22F 3/105, B29C 67/00, B23K 26/34

(54) **Verfahren zur Herstellung eines Formkörpers durch Metallpulverschmelzverfahren**
Process for preparing a workpiece through powder melting
Procédé de fabrication d'un objet par fusion de poudres

(43) Veröffentlichungstag der Anmeldung: 19.05.2004
(73) Patentinhaber: CL Schutzrechtsverwaltungs GmbH, 96215 Lichtenfels (DE)
(72) Erfinder: Herzog, Frank, 96215 Lichtenfels (DE)
(74) Vertreter: Hafner, Dieter

(56) Entgegenhaltungen:
- EP-A- 1 157 807
- DE-A1- 19 606 128
- DE-C1- 19 649 865
- DE-C2- 10 042 134
- JP-A- 10 156 951
- PATENT ABSTRACTS OF JAPAN vol. 1998, no. 11, 30. September 1998 (1998-09-30) -& JP 10 156951 A (TEIJIN SEIKI CO LTD), 16. Juni 1998 (1998-06-16)
- BEDIENUNGSANLEITUNG M 250 X S.0.1-0.5, S.7.16-7.32, Stand August 1999
- Bedienungsanleitung P 700, S.5.13-5.19, Stand September 2002
- Schreiben an die Firma Nolato Mobile AB, Kristianstad, Schweden
- Teilkopie des an Nolato Mobile AB ausgelieferten Operating Manuals
- Speditionsauftrag für eine Lieferung an die Firma HZS Hitachi Zosen Information Systems
- Eine interne Aufstellung des Lieferumfangs der Lieferung an HZS Hitachi Zosen

## Beschreibung

Die Erfindung betrifft ein Verfahren zur Herstellung eines Formköpers durch Metallpulverschmetz verfahren. Derartige Verfahren, die auch als "Rapid Prototyping" - oder "Rapid-Toufing"-Verfahren bezeichnet werden, wersten mit Metallpulvern durchgeführt. Verfahren, bei denen einoder mehrkomponentige Metallpulver durch Energieeintrag miteinander verfestigt werden, insbesondere ganz oder teilweise aufgeschmolzen werden, werden als Pulverschmelzverfahren bezeichnet.

Bei allen Verfahren wird das aus Pulver bestehende Baumaterial schichtweise auf eine Oberfläche aufgetragen und durch Eintrag der Strahlungsenergie verfestigt. In der Regel trifft die Strahlungsenergie - meist fokussierte Laserstrahlung - spurweise auf die zu verfestigende Schicht, wodurch das Pulver in jeder Spur ganz oder teilweise aufgeschmolzen wird.

Aus DE 186 49 885 ist ein Verfahren bekannt, bei welchem sich die Spuren, in welchen die Strahlungsenergie in die Pulverschicht eingetragen wird, sich seltlich überlappen. Dadurch wird eine sehr innige Verbindung der schmelzenden oder aufgeschmotzenen Bereiche der Pulverschicht erzielt. Nachteilig an dem Verfahren ist jedoch, daß aufgrund des Überlapps relativ lange Bauzelten erforderlich sind und aufgrund der "relhenwelsan" Belichtung der Schicht von einer zur anderen Seite ein Wärmegradient in der Schicht zu bechachten ist, der zu nicht unerheblichen Verspannungen des entstehenden Formkörpers führen kann.

Aus Patent Abstracts of Japan, Band 1998 Nr. 11, 30. September 1998 (JP 10156951) ist ein Stereollthografieverfahren bekannt, bei welchem zur Verfestigung einer Schicht zunächst eine Mehrzahl von sich seitlich überlappenden Parallelspuren eingetragen wird, sodann ein Abstand gelassen wird und dann erneut mehrere Sätze von sich parallel überlappenden Spuren verfestigt werden. Die Tiefe des Energleeintrages zur Verfestigung der Schichten Ist größer als die Schichtdicke. Die sich durch die überlappenden Einzelspuren ergebenden Bänder oder Streifen verfestigten Materiales werden durch sich kreuzende verfestigte Spuren quer verbunden.

Aus EP-A-1157807 ist ein Stereolithografieverfahren bekannt, bei welchem beabstandete parallele Spuren ohne Überlappung verfestigt werden. Die Verfestigungstiefe ist geringer ist als die Schichtdicke des aufgebrachten Materials. Diese verfestigten Streifen werden durch rechtwinklig dazu angeordnete verfestigte Streifen miteinander verbunden, wobei die Tiefe des Energieeintrages bei den sich kreuzenden Spuren ebenfalls geringer ist als die Schichtdicke.

Der Erfindung liegt die Aufgabe zugrunde, ein bekanntes Verfahren derart weiterzubliden, daß die genannten Nachteile vermieden werden und ein im wesentlichen spannungsfreier Formkörper unter Einsparung von Bauzeit mit aus eichender Festigkeit herstellbar ist. Diese Aufgabe wird durch das Verfahren nach Anspruch 1 gelöst, vorteilhafte Weiterblidungen Verfahrens ergeben sich aus den Unteransprüchen 2-16.

Als Kern des Verfahrens wird as angesehen, parallele erste Spuren, in welchen das aus Pulver bestehende Baumaterial durch Strahlungsenergie-Eintrag verfestigt wird, so nebeneinander anzuordnen, daß eine seitliche Überlappung mit benachbarten Parallelspuren im jedem Fall ausgeschlossen ist. Dadurch werden aufgeschmolzene Wülste gebildet, die sich seitlich aber nicht oder fast nicht berühren oder überlappen. Um diese aufgeschmolzenen Materialstränge, die mehr oder weniger unverbunden nebeneinander liegen, miteinander zu vernetzen, werden sich mit den ersten Spuren bzw. mit den in diesen liegenden Materialsträngen sich schneidende Spuren von Strahlungsenergie eingetragen, wobei die Kreuzungspunkte der ersten und zweiten Spuren zumindest teilweise aufgeschmolzen werden. Dadurch wird ein Geflecht aus verfestigten Materialsträngen gebildet, die zumindest an den Kreuzungspunkten miteinander verschmolzen sind. Die Kreuzungspunkte sind keine definierten Punkte, aufgrund der Verschmelzung der sich kreuzenden Spuren werden sich die Kreuzungspunkte etwas flächig ausbreiten und zu einer sehr innigen Verbindung der gesamten Struktur führen.

Die sich bildende Struktur des Formkörpers hat sich als relativ spannungsfrei erwiesen, von besonderem Vorteil ist insbesondere, daß das Verfahren einen stochastisch verteilten Eintrag der Spuren ermöglicht, so daß eine gleich verteilte Erwärmung der Pulverschichtfläche erzielt werden kann, wodurch Spannungen vermieden werden.

Die zweiten Spuren können zu den ersten Spuren rechtwinklig verlaufen, es sind aber auch andere Geometrien denkbar. Darüber hinaus ist es möglich, die parallel zueinander verlaufende Stränge übereinanderliegender Schichten mit seitlichem Versatz zueinander anzuordnen. Auch die Kreuzungspunkte übereinander liegender Schichten können mit seitlichem Versatz zueinender angeordnet werden, beispielsweise mit der halben Maschenweite des gebildeten Geflechtes.

Es ist möglich, die ersten Spuren innerhalb erster ausgewählter Bereiche unter Parallellage anzuordnen und die zweiten Spuren unter Parallellage innerhalb zweiter ausgewählter Bereiche anzuordnen, wobei die zweiten Bereiche mindestens zwei oder mehrere nebeneinander liegende erste Bereiche überlappen. Dies bedeutet nichts anderes, als durch das Verfahren nebeneinenderliegende erste mehr oder weniger verbundene Geflechte aus Materialsträngen ausgebildet werden, und zweite Geflechte aus Materialsträngen darüber gelegt werden, wobei die zweiten Geflechte aus Materialsträgen die Bereichsgrenzen der ersten Geflechte überdekken. Die einzelnen Bereiche können nach Anordnung der in sie eingetragenen Spuren von Strahlungsenergie mit einer Randspur versehen werden, wodurch die Enden von durch die Spuren innerhalb eines Bereiches gebildeten Materialstränge miteinander verbunden werden. Dies ist insofern vorteilhaft, als für nachfolgende Pulverbeschichtungen sicher gestellt ist, daß die Materialstränge innerhalb der Spuren bereits einen ausreichend festen Verbund haben.

Die Ansprüche 9 und 10 befassen sich mit vorteilhaften stochastischen Verteilungen des Energieeintrages zur Vermeidung von Spannungen. Die Ansprüche 11 ff. sehen vor, daß die sich schichtweise bildende Geflechtstruktur durch einen weiteren Eintrag von Strahlungsenergie geglättet wird. Es ist mit Vorteil möglich, die Buckel von Materialsträngen durch Überschmelzen etwas abzutragen, wodurch der Auftrag welterer Pulverschichten erleichtert wird, weil die Rackel von Pulverbeschichtern an allzu hoch vorspringenden Materialstrukturen nicht hängen bleiben können. Der weitere Eintrag von Strahlungsenergie kann mit Scanvektoren, erfolgen die zu den Scanvektoren oder Spuren der ersten oder zweiten Spuren einen Winkel einschließen. Der weitere Eintrag von Strahlungsenergie erfolgt abrasternd, grundsätzlich ist es auch möglich, beim Glätten durch weiteren Strahlungsenergie-Eintrag einen modifizierten Fokus, d. h. eine modifizierte Strahlungsenergledichte zu verwenden. Die Modifizierung des Fokus kann außerdem durch Höhenverstellung der den entstehenden Formkörper tragenden Bauplatte der Baueinrichtung erfolgen.

Die Erfindung ist anhand von Ausführungsbeispielen in den Zeichnungsfiguren näher erläutert.

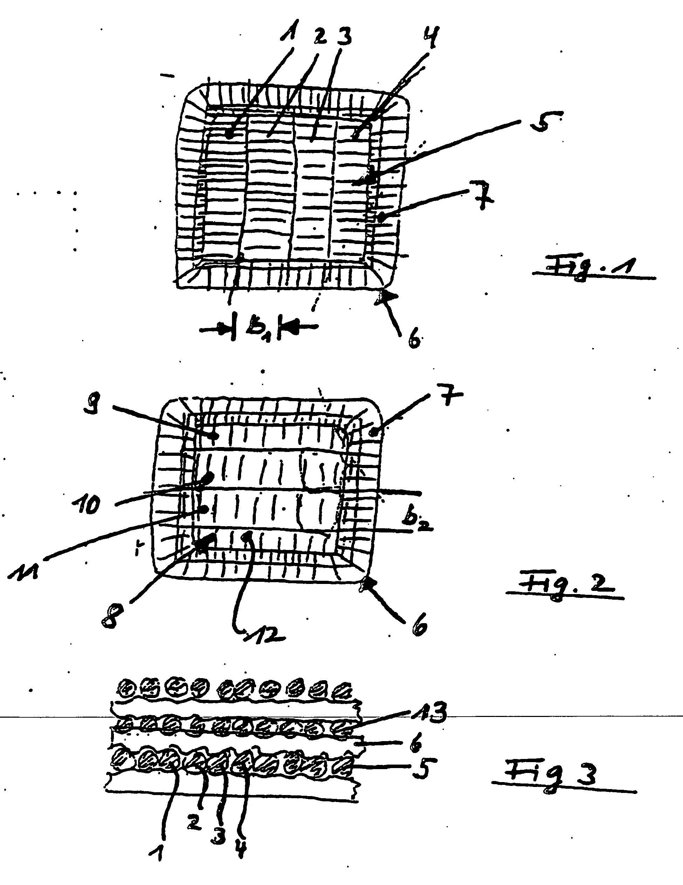

Diese zeigen:
- Fig. 1: eine schematische Draufsicht auf eine erste Bauteilschicht mit einer ersten Ausrichtung paralleler Spuren;
- Fig. 2: eine schematische Draufsicht auf eine zweite Bauteilschicht mit Spuren, die zu den ersten Spuren gemäß Figur 1 rechtwinklig angeordnete sind;
- Fig. 3: einen Schnitt durch mehrere Bauteilschichten;
- Fig 4: zwei übereinenderliegende Schichten (auseinandergezogen dargestellt) mit versetzt Obereinanderliegenden Spuren,
- Fig. 5: einen Schnitt durch die Schichtanordnung ge-mäß Figur 3;
- Fig. 8: eine schematische Ansicht einer Bauteilschicht mit ersten und zweiten Spuren sowie schräg darüber verlaufenden dritten Spuren zur Glättung;

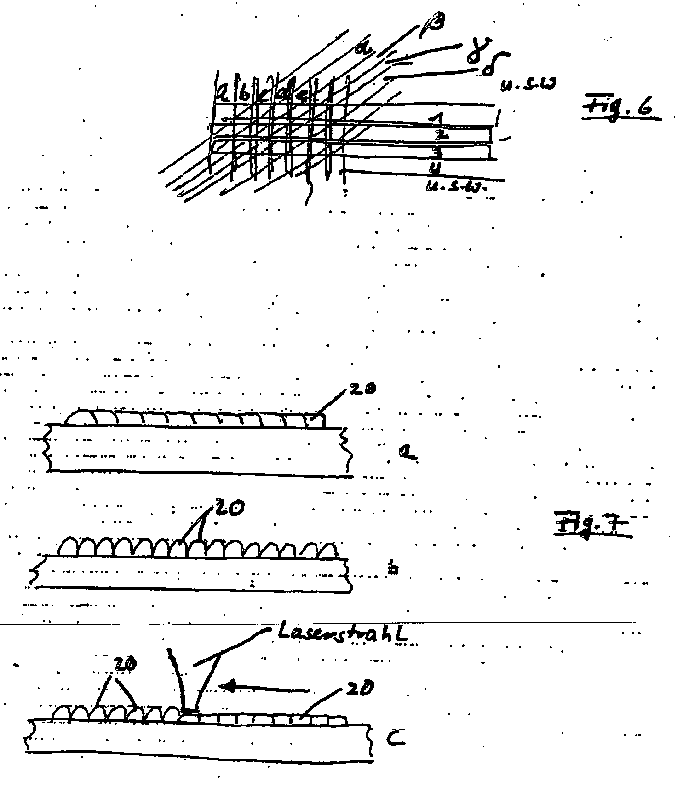

- Fig. 7: eine schematische Schnittdarstellung durch eine auf eine Unterlage aufgebrachte Schicht, wobei gemäß
- a) die Spuren sich überlappen (Stand der Technik)
- b) die Spuren sich nicht überlappen und
- c) die Spuren nicht überlappen, aber geglättet werden.
zunächst wird auf Zeichnungsfiguren 1 - 3 Bezug genommen. Bei den erfindungsgemäßen Verfahren wird in an sich bekannter Weise zunächst aus Pulver bestehendes Baumaterial schichtweise auf eine Oberfläche oder Untertage aufgetragen und sodann mit einem Laserstrahl abgascannt. Dabei wird das Pulver jeder Schicht ganz oder teilweise aufgeschmolzen. In Figur 1 ist nun zunächst sehr vergröbert dargestellt, wie zeichnerisch in Vertikalrichtung verlaufende Spuren 1 - 4 als erste Spuren einer ersten Schicht 5 angeordnet werden. Die Spurbreite b ist dabei so gewählt, daß die ersten Spuren 1 - 4 zwar unmittelbar nebeneinander liegen, sich aber nicht überlappen. Sobald die Innenstruktur der ersten Schicht 5 fertig gestellt ist, wird die Bauteilkontur 6 mit einer Randspur 7 umfahren, wobei die Randspur 7 die Enden der Spuren 1 - 4 miteinander verbindet.

Sodann wird erneut durch eine Beschichtervorrichtung weiteres, aus Pulver bestehendes Baumaterial aufgetragen und eine zweite Schicht 8 verfestigt, wobei zweite Spuren 9 - 12 angeordnet werden, die sich mit den ersten Spuren 1 - 4 schneiden, beim Ausführungsbeispiel insbesondere rechtwinklig da zu verlaufen. Auf dann kann wieder eine Randspur 7 um die Bauteilkontur-6 herumgelegt werden.

Im Schnitt ergibt sich abgesehen von der Randspur 7 eine Bauteilstruktur wie sie in Figur 3 schematisch dargestellt ist. Die Spuren einer dritten Schicht 13 liegen dabei deckungsgleich, über den Spuren 1 - 4 der ersten Schicht 5, gleiches gilt für die Spuren einer Jeden über nächsten Schicht.

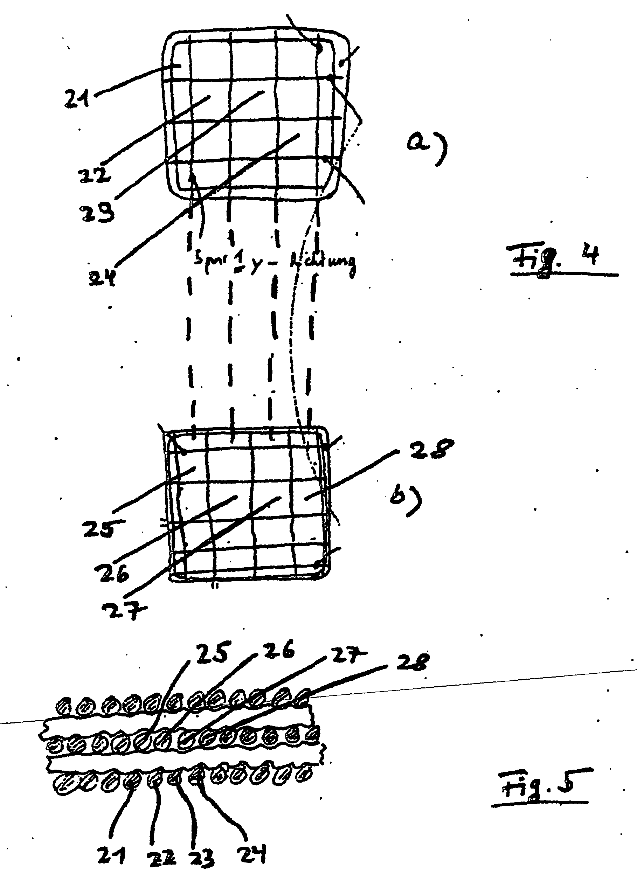

In Figuren 4 und 5 ist nun dargestellt, wie übereinanderliegende Spuren in einem Versatz angeordnet sein können.

Man sieht, daß sich die zeichnerisch in Vertikalrichtung verlaufenden Spuren 21 - 24 und die Spuren der übernächsten Schicht 25 - 28 um eine halbe Spurbreite seitlich versetzt sind. Gleiches kann natürlich auch für die zeichnerisch in X-Richtung verlaufenden Spuren gelten. Dabei ergibt sich eine Struktur, wie sie im Schnitt in Figur 5 dargestellt ist. Aufgrund der versetzten Anordnung ergibt sich ein relativ dichtes, stark vernetztes Gitter, was zu einen hochbeisstbaren Formkörper führt.

In Figur 8 sind beispielsweise nebeneinander liegende zeichnerisch in Vertikalrichtung, verlaufende erste Spuren a b c de dargestellt, die von in Horizontalrichtung verlaufende Spuren 1 2 3 4 unter einem Winkel von 90° Grad geschnitten werden. Zur Glättung können nun beispielsweise schrägverlaufende Spuren a β y δ gelegt werden, die die rillige Oberflächenstruktur der verfestigten Materialsträngen 20 so glätten, wie dies auf der rechten Seite von Figur 7c dargestellt ist. Dadurch ergibt sich eine relativ glatte verdichtete Oberfläche.

## Patentansprüche

1. Verfahren zur Herstellung einer Formkörpers aus Metallpulver, nämlich Melallpulverschmelzverfahren, wobei
- aus Metallpulver bestehendes Baumaterial schichtweise auf eine Oberfläche aufgetragen und
- durch den Eintrag von Strahlungsenergie verfestigt wird,
- die Strahlungsenergie spurweise auf die zu verfestigende Schicht trifft und
- das Metallpulver in jeder Schicht aufgeschmolzen wird;
- zur Verfestigung des Formkörpers sich mit ersten parallelen Spuren (1 - 4) kreuzende zweite Spuren (9 - 12) von Strahlungsenergie derart eingetragen werden, dass
- verfestigte parallel erste und parallele zweite Einzelmaterialstränge (20) gebildet werden,
- wobei die unverbundenen, unmittelbar nebeneinanderliegenden ersten Einzelmaterialstränge durch die zweiten Einzelmaterialstränge zu einer vernetzten Geflechstruktur verbunden werden, und
- eine Überlappung von benachbarten Parallelspuren (1 - 4, 9 - 12) vermieden wird sowie
- die zweiten Spuren über die ersten Spuren gelegt werden, nachdem eine weitere Pulverschicht aufgetragten worden ist, und
- die Kreuzungspunkte der ersten und zweiten Einzelmaterialstränge (20) zur Bildung eines Gitters aus Einzelmaterialstränge (20) miteinander verschmolzen sind.

2. Verfahren nach einem Anspruch 1,
**dadurch gekennzeichnet, dass**
die zweiten Spuren zu den ersten Spuren rechtwinklig verlaufen.

3. Verfahren nach einem der vorhergehenden Ansprüche,
**dadurch gekennzeichnet, dass**
die parallel zueinander verlaufende Stränge übereinanderliegender Schichten mit seitlichem Versatz zueinander angeordnet werden.

4. Vefahren nach einem der vorhergehenden Ansprüche,
**dadurch gekennzeichnet, dass**
die Kreuzungspunkte übereinanderliegender Schichten mit seitlichem Versatz zueinander angeordnet werden.

5. Verfahren nach einem der vorhergehenden Ansprüche 3 - 4,
**dadurch gekennzeichnet, dass**
der Versatz etwa eine halbe Maschenweite des Geflechtes beträgt.

6. Verfahren nach einem der vorhergehenden Ansprüche,
**dadurch gekennzeichnet, dass**
die ersten Spuren innerhalb erster ausgewählter Bereiche unter Parallellage angeordnet werden und die zweiten Spuren unter Parallellage innerhalb zweiter ausgewählter Bereiche angeordnet werden und die zweiten Bereiche mindestens zwei oder mehrere nebeneinanderliegende erste Bereiche überlappen.

7. Verfahren nach Anspruch 6
**dadurch gekennzeichnet, dass**
die Bereiche nach Anordnung der in sie eingetragenen Spuren mit einer Randspur versehen werden.

8. Verfahren nach Anspruch 7,
**dadurch gekennzeichnet, dass**
die Randspur die Enden von durch die Spuren innerhalb eines Bereiches gebildeten Materialstränge miteinander verbinden.

9. Verfahren nach einem der vorhergehenden Ansprüche,
**dadurch gekennzeichnet, dass**
der Eintrag der Spuren pro Schicht nach Maßgabe einer stochastischen Verteilung erfolgt.

10. Verfahren nach einem der vorhergehenden Ansprüche 6-9,
**dadurch gekennzeichnet, dass**
die Relhenfolge des Strahlungsenergie-Eintrages in ausgewählte Bereiche nach Maßgabe einer stochastischen Verteilung bestimmt wird.

11. Verfahren nach einem der vorhergehenden Ansprüche,
**dadurch gekennzeichnet, dass**
die sich schichtweise bildende Geflechtstruktur durch einen weiteren Eintrag von Strahlungsenergie geglättet oder teilweise abgetragen wird.

12. Verfahren nach Anspruch 11,
**dadurch gekennzeichnet, dass**
der weitere Eintrag von Strahlungsenergie mit Scanvektoren erfolgt, die zu den Scanvektoren (Spuren) der ersten und/oder zweiten Spuren einen Winkel einschließen.

13. Verfahren nach Anspruch 11 oder 12,
**dadurch gekennzeichnet, dass**
der weitere Eintrag von Strahlungsenergle abrasternd erfolgt.

14. Verfahren nach einem der vorhergehenden Ansprüche 11-13,
**dadurch gekennzeichnet, dass**
der weitere Eintrag von Strahlungsenergie gegenüber dem Strahlungsenergie-Eintrag der ersten und/oder zweiten Spuren mit einem modifizierten Fokus erfolgt.

15. Verfahren nach Anspruch 14,
**dadurch gekennzeichnet, dass**
die Modifizierung des Fokus durch Höhenverstellung der den entstehenden Formdkörper tragenden Bauplatte der Schmelzvorrichtung erfolgt.

16. Verfahren nach einem der vorhergehenden Ansprüche,
**dadurch gekennzeichnet, dass**
parallel nebeneinander liegende verfestigte Materialstränge beim erneuten Eintrag von Strahlungsenergie glättend miteinander verschmolzen werden.

## Claims

1. Process for producing a shaped body from metal powder, namely a metal powder fusion process, wherein
- building material consisting of metal powder is applied in layers to a surface and
- is solidified by the introduction of radiation energy,
- the radiation energy impinges in tracks on the layer to be solidified, and
- the metal powder in each layer is fused;
- to solidify the shaped body, second tracks (9-12) of radiation energy intersecting with first parallel tracks (1-4) are introduced in such a manner that
- solidified parallel first and parallel second individual material strands (20) are formed,
- wherein the unjoined first individual material strands lying directly next to one another are joined by the second individual material strands to form an interconnected network structure, and
- overlapping of adjacent parallel tracks (1-4, 9-12) is avoided, and also
- the second tracks are placed above the first tracks once a further layer of powder has been applied, and
- the points of intersection of the first and second individual material strands (20) are fused to one another to form a lattice of individual material strands (20).

2. Process according to Claim 1,
**characterized in that**
the second tracks extend at right angles to the first tracks.

3. Process according to either of the preceding claims,
**characterized in that**
the strands extending parallel to one another of layers which lie one above another are arranged such as to be offset laterally with respect to one another.

4. Process according to one of the preceding claims,
**characterized in that**
the points of intersection of layers which lie one above another are arranged such as to be offset laterally with respect to one another.

5. Process according to either of the preceding Claims 3 and 4,
**characterized in that**
the offset amounts to approximately half the mesh opening of the network.

6. Process according to one of the preceding claims,
**characterized in that**
the first tracks are arranged within first selected regions in a parallel position, and the second tracks are arranged within second selected regions in a parallel position, and the second regions overlap at least two or more first regions which lie next to one another.

7. Process according to Claim 6,
**characterized in that**
the regions are provided with a marginal track according to the arrangement of the tracks introduced therein.

8. Process according to Claim 7,
**characterized in that**
the marginal tracks connect the ends of material strands formed by the tracks within a region to one another.

9. Process according to one of the preceding claims,
**characterized in that**
the tracks are introduced for each layer in accordance with a stochastic distribution.

10. Process according to one of the preceding Claims 6-9,
**characterized in that**
the sequence of the introduction of radiation energy into selected regions is determined in accordance with a stochastic distribution.

11. Process according to one of the preceding claims,
**characterized in that**
the network structure which forms in layers is smoothed or partially abraded by a further introduction of radiation energy.

12. Process according to Claim 11,
**characterized in that**
the further introduction of radiation energy is effected using scan vectors which include an angle with the scan vectors (tracks) of the first and/or second tracks.

13. Process according to Claim 11 or 12,
**characterized in that**
the further introduction of radiation energy is effected by a scanning process.

14. Process according to one of the preceding Claims 11-13,
**characterized in that**
the further introduction of radiation energy is effected with a modified focus as compared with the introduction of radiation energy of the first and/or second tracks.

15. Process according to Claim 14,
**characterized in that**
the focus is modified by vertically adjusting the building panel, which bears the foreign body being produced, of the melting apparatus.

16. Process according to one of the preceding claims,
**characterized in that**
solidified material strands lying next to one another in parallel are fused to one another with a smoothing effect upon renewed introduction of radiation energy.

## Revendications

1. Procédé de fabrication d'un corps façonné en poudre métallique, à savoir procédé de fusion de poudre métallique, sachant que
- un matériau constitué de poudre métallique est déposé couche par couche sur une surface
- et est solidifié par l'application d'énergie de rayonnement,
- l'énergie de rayonnement atteint sur des pistes la couche à solidifier et
- la poudre métallique dans chaque couche est mise en fusion,
- afin de solidifier le corps façonné, des deuxièmes pistes (9 - 12) d'énergie de rayonnement qui croisent des premières pistes parallèles (1 - 4) sont appliquées de telle sorte que
- des premiers boudins individuels parallèles (20) et des deuxièmes boudins individuels parallèles (20) de matériau solidifié sont formés
- les premiers boudins individuels de matériau non reliés, directement juxtaposés étant reliés par les deuxièmes boudins individuels de matériau en une structure de treillis interconnectée, et
- un chevauchement de pistes parallèles voisines (1-4, 9-12) étant évité, et
- les deuxièmes pistes étant appliquées sur les premières pistes après avoir déposé une couche supplémentaire de poudre, et
- les points d'intersection des premiers et deuxièmes boudins individuels (20) de matériau étant fondus pour former un treillis de boudins individuels (20) de matériau.

2. Procédé selon la revendication 1, **caractérisé en ce que** les deuxièmes pistes s'étendent à angle droit des premières pistes.

3. Procédé selon l'une des revendications précédentes, **caractérisé en ce que** les boudins de couches superposées qui s'étendent parallèlement entre eux sont disposés avec un décalage latéral mutuel.

4. Procédé selon l'une des revendications précédentes, **caractérisé en ce que** les points d'intersection de couches superposées sont disposés avec un décalage latéral mutuel.

5. Procédé selon la revendication 3 ou 4, **caractérisé en ce que** le décalage est égal à environ une demi-largeur de maille du treillis.

6. Procédé selon l'une des revendications précédentes, **caractérisé en ce que** les premières pistes sont disposées en parallèle à l'intérieur de premières régions sélectionnées et les deuxièmes pistes sont disposées en parallèle à l'intérieur de deuxièmes régions sélectionnées, et les deuxièmes régions chevauchent au moins deux ou plusieurs premières régions juxtaposées.

7. Procédé selon la revendication 6, **caractérisé en ce que** les régions sont pourvues d'une piste de bord en fonction de la disposition des pistes qui sont appliquées dans ces régions.

8. Procédé selon la revendication 7, **caractérisé en ce que** la piste de bord relie entre elles les extrémités des boudins de matériau formés par les pistes à l'intérieur d'une région.

9. Procédé selon l'une des revendications précédentes, **caractérisé en ce que** l'application des pistes pour chaque couche s'effectue conformément à une distribution stochastique.

10. Procédé selon l'une des revendications 6 à 9, **caractérisé en ce que** l'ordre de succession de l'application de l'énergie de rayonnement dans des régions sélectionnées est déterminé conformément à une distribution stochastique.

11. Procédé selon l'une des revendications précédentes, **caractérisé en ce que** la structure de treillis qui se forme couche par couche est égalisée ou partiellement enlevée par une application supplémentaire d'énergie de rayonnement.

12. Procédé selon la revendication 11, **caractérisé en ce que** l'application supplémentaire d'énergie de rayonnement s'effectue avec des vecteurs de balayage qui forment un angle avec les vecteurs de balayage (pistes) des premières et/ou deuxièmes pistes.

13. Procédé selon la revendication 11 ou 12, **caractérisé en ce que** l'application supplémentaire d'énergie de rayonnement s'effectue en quadrillage.

14. Procédé selon l'une des revendications 11 à 13, **caractérisé en ce que** l'application supplémentaire d'énergie de rayonnement s'effectue avec un foyer modifié par rapport à l'application d'énergie de rayonnement des premières et/ou deuxièmes pistes.

15. Procédé selon la revendication 14, **caractérisé en ce que** la modification du foyer s'effectue par le réglage en hauteur de la plaque du dispositif de fusion qui porte le corps façonné produit.

16. Procédé selon l'une des revendications précédentes, **caractérisé en ce que** des boudins solidifiés de matériau juxtaposés en parallèle sont liés par fusion avec égalisation lors de la nouvelle application d'énergie de rayonnement.
